# DEMANDE DE BREVET EUROPEEN

(11) **EP 0 722 689 A1**
(43) Date de publication de la demande: **24.07.1996**
(21) Numéro de dépôt: 96400077.2
(22) Date de dépôt: 12.01.1996
(51) Int. Cl.: A47J 36/10, A47J 27/04

(54) **Couvercle de sécurité pour récipient de cuisson**

(30) Priorité: 20.01.1995 FR 9500636
(71) Demandeur: SEB S.A., F-69130 Ecully (FR)
(72) Inventeur: Raoult, Philippe, F-74370 Pringy (FR)
(74) Mandataire: Keib, Gérard

(57) **Abrégé**

Le couvercle (17) de sécurité pour récipient de cuisson (15) comporte en deux endroits sensiblement opposés de sa périphérie des moyens de verrouillage adaptés à coopérer avec des moyens de verrouillage complémentaires d'un récipient de cuisson (15) pour verrouiller ledit couvercle (17) sur ledit récipient (15). Le couvercle (17) comporte également un passage traversant (7) pour la sortie de la vapeur. Les moyens de verrouillage sont adaptés à une cuisson sensiblement sans pression et comportent au moins un élément mobile solidaire du couvercle (17) ou du récipient (15) et adapté à être actionné dans un sens pour l'amener dans une position dans laquelle il est en prise avec des moyens complémentaires du récipient (15) ou du couvercle (17), et dans le sens opposé pour l'amener au moins momentanément dans une autre position dans laquelle il n'est plus en prise avec lesdits moyens complémentaires.

## Description

La présente invention concerne un couvercle de sécurité pour récipient de cuisson comportant un bord supérieur évasé vers l'extérieur formant bord verseur.

On connaît déjà, pour un récipient de cuisson sous pression, un couvercle de sécurité pour récipient de cuisson, comportant en deux endroits sensiblement opposés de sa périphérie des moyens de verrouillage adaptés à coopérer avec des moyens de verrouillage complémentaires d'un récipient de cuisson pour verrouiller ledit couvercle sur ledit récipient d'une manière telle qu'une opération manuelle au moins est nécessaire pour désolidariser le couvercle du récipient, le couvercle comportant également un passage traversant pour la sortie de la vapeur.

On connaît aussi un couvercle de sécurité qui est verrouillé par un mouvement de rotation relatif du couvercle par rapport au récipient, au cours duquel des parties en saillie radialement vers l'intérieur du couvercle viennent en prise avec des parties radialement en saillie vers l'extérieur du récipient.

Dans une autre réalisation connue, on visse, sur une vis solidaire du couvercle, un écrou solidaire d'un étrier pour éloigner du couvercle cet étrier dont les extrémités viennent en prise avec deux oreilles solidaires du récipient.

De tels couvercles de sécurité ne sont pas adaptés à être utilisés avec un récipient de cuisson sensiblement sans pression.

Pour une cuisson classique sensiblement sans pression, on pose simplement un couvercle sur la partie supérieure du récipient, de manière non étanche pour permettre le passage de la vapeur.

L'expérience prouve qu'il arrive fréquemment des accidents avec de tels récipients et de tels couvercles: si le récipient est renversé, le couvercle se sépare du récipient et le contenu du récipient s'échappe et peut provoquer, s'il est chaud, de graves brûlures à une personne.

On connaît également par le document GB-A-2093333, un couvercle et un récipient ayant des moyens de verrouillage adaptés à une cuisson sensiblement sans pression et comportant au moins un élément mobile solidaire du couvercle ou du récipient et adapté à être actionné dans un sens pour l'amener dans une position dans laquelle il est en prise avec des moyens complémentaires du récipient ou du couvercle, et dans le sens opposé pour l'amener au moins momentanément dans une autre position dans laquelle il n'est plus en prise avec lesdits moyens complémentaires.

Cependant, dans ce document, les moyens de verrouillage décrits sont soit fixés sur la paroi du récipient, soit viennent en prise avec une poignée du récipient. Ils nécessitent donc de créer sur le récipient des dispositifs complémentaires de fixation.

La présente invention a pour but de remédier aux inconvénients des couvercles connus, et de proposer un couvercle de sécurité pour récipient de cuisson sensiblement sans pression, qui soit de structure simple et très économique, tout en étant capable d'éviter un accident en cas de renversement intempestif du récipient de cuisson muni dudit couvercle.

Suivant l'invention, le couvercle de sécurité du type précité est caractérisé en ce que les moyens de verrouillage comportent au moins un organe formant crochet adapté à venir en prise sous le bord verseur pour verrouiller le couvercle sur le récipient.

Un tel couvercle présente ainsi une structure très simple et économique, tandis que les moyens de verrouillage maintiennent le couvercle sur le récipient, même en cas de renversement de celui-ci. De plus, le récipient ne comporte aucun moyen de verrouillage particulier autre que son propre bord verseur.

Suivant une version avantageuse de l'invention, les moyens de verrouillage comprennent au moins un moyen encliquetable, d'utilisation facile et rapide.

Suivant une autre version de l'invention, le couvercle de sécurité comporte des moyens adaptés à obturer au moins partiellement le passage de sortie de vapeur.

Suivant une version avantageuse de l'invention, les moyens adaptés à obturer au moins partiellement le passage de sortie de vapeur comprennent une languette mobile adaptée à être déplacée manuellement pour obturer plus ou moins complètement de manière non étanche le passage de sortie de vapeur.

Suivant une version préférée de l'invention, les moyens adaptés à obturer au moins partiellement le passage de sortie de vapeur comprennent en outre un organe mobile à l'intérieur du passage de sortie de vapeur, l'organe mobile et le passage de sortie de vapeur étant conformés d'une façon telle que l'organe mobile est dans une position de repos dans laquelle il n'obstrue pas le passage de sortie de vapeur, lorsque le couvercle est dans une position dans laquelle son bord inférieur est sensiblement horizontal, et est adapté à passer par gravité dans une seconde position dans laquelle il obstrue le passage de sortie de vapeur, lorsque le couvercle est dans une position dans laquelle son bord inférieur fait un angle prédéterminé avec un plan horizontal.

D'autres particularités et avantages de l'invention apparaîtront dans la description détaillée ci-après.

Aux dessins annexés donnés à titre d'exemples non limitatifs :
- la figure 1 est une vue en coupe axiale d'un récipient muni d'un couvercle de sécurité suivant un premier mode de réalisation de l'invention ;
- la figure 2 est une vue en élévation, partiellement en coupe, d'un couvercle de sécurité selon un autre mode de réalisation de l'invention, le couvercle étant représenté dans une position intermédiaire au cours de sa mise en place sur un récipient ;
- la figure 3 est une vue semblable à la figure 2, le couvercle étant fixé sur le récipient ;
- la figure 4 est une vue agrandie en coupe de l'anse du couvercle représentée aux figures 2 et 3 ;
- la figure 5 est une vue d'un détail de la figure 4, le levier de verrouillage étant dans sa position ouverte ;
- les figures 6 et 7 sont des vues d'un autre détail de la figure 4, représentant respectivement la languette d'obturation dans deux autres positions ;
- la figure 8 est une vue agrandie d'un autre détail de la figure 4 ;
- la figure 9 est une vue d'un détail de la figure 3, le récipient étant dans une position renversée.

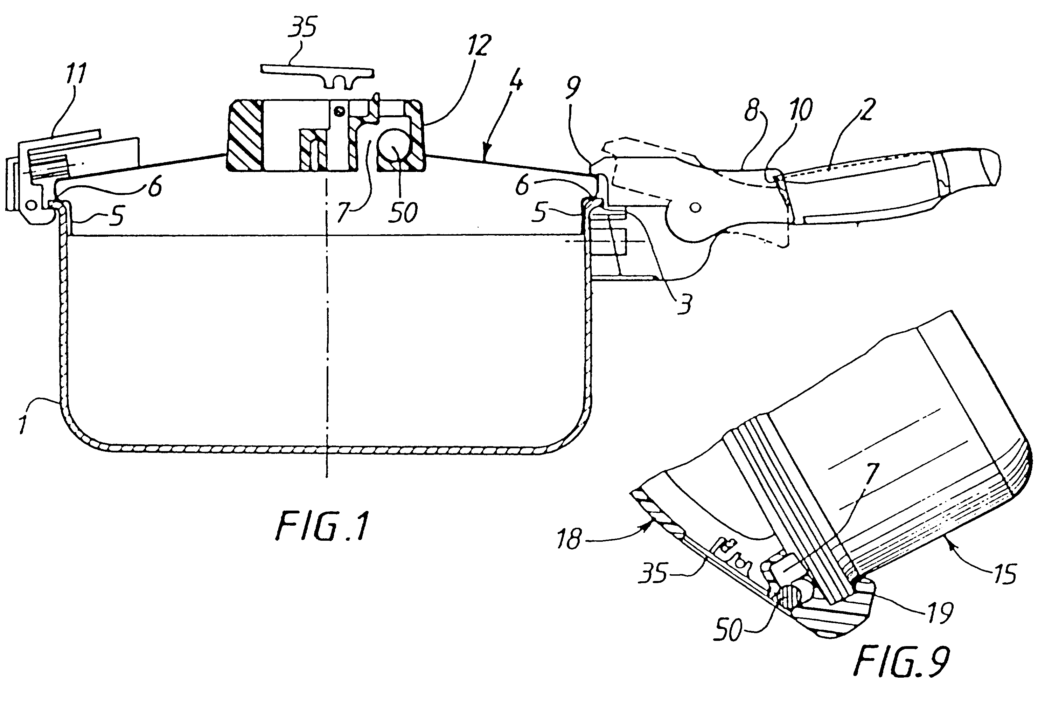

Dans le mode de réalisation de la figure 1, le récipient de cuisson est une casserole adaptée à une cuisson sensiblement sans pression. La casserole 1 comporte une poignée 2 et un bord supérieur 3 évasé sur l'extérieur formant bord verseur. Le couvercle 4 comporte une virole cylindrique 5 adaptée à pénétrer à l'intérieur de la casserole 1. La virole 5 se prolonge par un épaulement en saillie vers l'extérieur adapté à prendre appui sur le bord évasé 3 de la casserole 1.

Le couvercle 4 comporte en deux endroits sensiblement opposés de sa périphérie des moyens de verrouillage adaptés à coopérer avec des moyens de verrouillage complémentaires de la casserole 1 pour verrouiller le couvercle 4 sur la casserole 1 d'une manière telle qu'une opération manuelle au moins est nécessaire pour désolidariser le couvercle 4 de la casserole 1. Le couvercle 4 comporte également un passage traversant 7 pour la sortie de la vapeur.

Dans le mode de réalisation représenté, les moyens de verrouillage sont adaptés à une cuisson sensiblement sans pression et comportent au moins un élément mobile solidaire du couvercle 4 ou de la casserole 1 et adapté à être actionné dans un sens pour l'amener dans une position dans laquelle il est en prise avec des moyens complémentaires de la casserole 1 ou du couvercle 4, et dans le sens opposé pour l'amener au moins momentanément dans une autre position dans laquelle il n'est plus en prise avec lesdits moyens complémentaires.

On voit sur la figure 1 que la poignée 2 comporte un levier pivotant 8 présentant à son extrémité du côté du couvercle un ergot 9 en saillie vers l'intérieur de la casserole. Le levier est, par exemple, un levier pivotant coopérant de manière connue avec un élément élastique, par exemple une lame de ressort, schématisé en 10, entre une première position stable déverrouillée, représentée en tirets sur la figure, dans laquelle le couvercle 4 est libre, et une seconde position stable verrouillée, représentée en traits pleins sur la figure, dans laquelle l'ergot 9 maintient le couvercle 4 sur la casserole 1.

Dans la partie gauche de la figure, le couvercle 4 comporte un second levier pivotant formant crochet 11 adapté à venir en prise sous le bord verseur 3 pour verrouiller le couvercle 4 sur la casserole 1.

De préférence, la surface extérieure de la partie inférieure du second levier pivotant 11 est conformée de façon que ledit levier 11 soit encliquetable par simple pression du couvercle 4 sur la casserole 1.

Le couvercle 4 présente en outre, sensiblement en son centre, un bloc 12 comportant le passage traversant 7 pour le passage de la vapeur, et comportant des moyens adaptés à obturer au moins partiellement le passage 7.

Ces moyens seront décrits ci-dessous en détail.

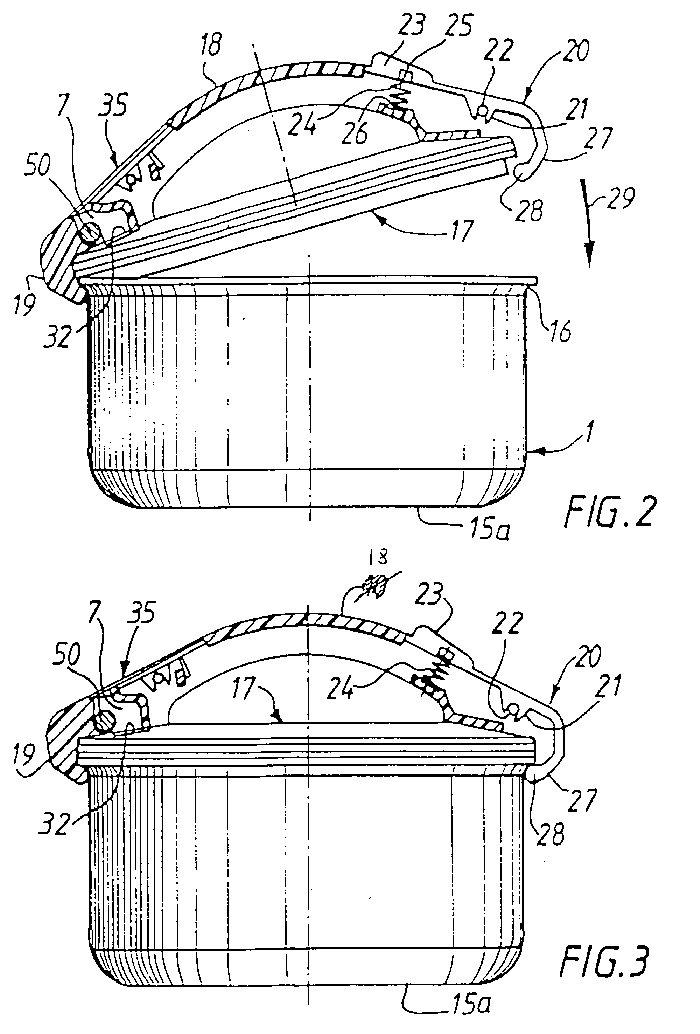

Dans le mode de réalisation représenté aux figures 2 et 3, le récipient de cuisson 15 est un récipient de cuisson quelconque, casserole ou autre. Il comporte également un bord supérieur 16 évasé vers l'extérieur formant bord verseur. Il ne comporte aucun autre moyen de verrouillage particulier.

Le couvercle de sécurité 17 porte lui-même tous les moyens de verrouillage nécessaires pour coopérer avec le bord supérieur évasé 16 afin de verrouiller le couvercle 17 sur le récipient 15.

Le couvercle 17 présente à cet effet une anse 18 disposée sensiblement selon un diamètre du couvercle 17 et comportant par elle-même tous lesdits moyens de verrouillage.

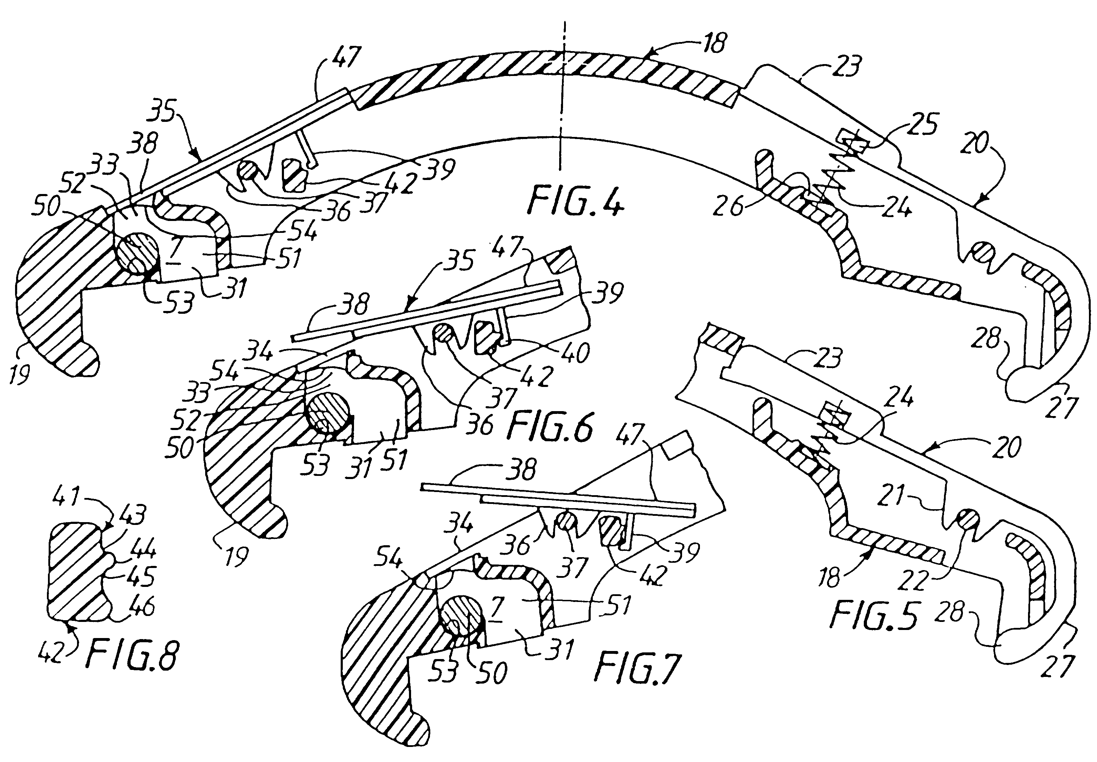

L'anse 18 comporte ainsi, comme représentée en détail aux figures 4,6 et 7, à son extrémité représentée à gauche des figures, un premier organe formant crochet 19 fixe adapté à venir en prise sous le bord évasé 16.

L'anse 18 comporte également, à son extrémité située à droite sur les figures, un second organe formant crochet mobile 20. L'organe 20 est un levier monté sur le couvercle 17 dans une direction sensiblement radiale de manière pivotante autour d'un axe sensiblement parallèle au fond 15a du récipient 15 et perpendiculaire à ladite direction radiale.

Dans le mode de réalisation représenté, le second organe mobile 20 est un organe moulé d'une seule pièce qui comporte sur sa surface inférieure une partie en saillie en forme de U 21 adaptée à venir s'encliqueter sur un axe 22 solidaire de l'anse 18. Le levier 20 comporte à son extrémité dirigée vers le centre du couvercle 17 une partie épaisse 23 adaptée à recevoir une poussée vers l'intérieur du récipient pour faire basculer le levier 20 en vue du déverrouillage dudit levier. Un ressort antagoniste 24 est monté entre une cuvette 25 ménagée sur la face inférieure de la partie épaisse 23, et une seconde cuvette 26 solidaire de l'anse 18 de façon à maintenir le levier 20 dans sa position verrouillée en l'absence de toute sollicitation manuelle sur la partie épaisse 23.

A l'opposé de la partie épaisse 23, le levier 20 comporte une extrémité 27 en forme de crochet se terminant par un renflement 28 adapté à venir se loger sous le bord évasé 16 du récipient 15 pour verrouiller le couvercle 17 sur ledit récipient. La surface inférieure du renflement 28 et de l'extrémité 27 est de préférence conformée de manière à provoquer le basculement du levier 20 dans le sens du déverrouillage lorsque l'on exerce une pression vers le bas sur le couvercle. Le levier 20 constitue ainsi un levier encliquetable. Ainsi, et comme représenté à la figure 2, pour mettre en place le couvercle 17 sur le récipient 15, on dispose le couvercle 17 de manière à amener le premier organe formant crochet fixe 19 en prise avec le bord évasé 16, puis on abaisse le couvercle 17 sur le récipient 15 dans le sens de la flèche 29. Lorsque le renflement 28 arrive au contact du bord évasé 16, et que l'on exerce une légère pression vers le bas sur le couvercle, le levier 20 pivote dans le sens anti-horaire pour passer de sa position verrouillée de la figure 4 à sa position déverrouillée représentée à la figure 5. Le levier 20 revient à sa position verrouillée lorsque le couvercle 17 est en place au-dessus du récipient 15, le renflement 28 étant en prise sous le bord évasé 16, comme représenté à la figure 3.

Le couvercle 17 comporte également un passage de sortie de vapeur 7 débouchant par sa partie inférieure 31 dans une ouverture 32 du couvercle, et par sa partie supérieure 33 dans une ouverture 34 ménagée sur la surface supérieure de l'anse 18.

Les moyens adaptés à obturer au moins partiellement le passage 7 de sortie de vapeur comprennent une languette mobile 35 adaptée à être déplacée manuellement pour obturer plus ou moins complètement de manière non étanche le passage 7 de sortie de vapeur.

Comme représenté en détail aux figures 4, 6 et 7, la languette mobile 35 est montée de manière pivotante sur le couvercle 17. Elle présente à cet effet sur sa surface inférieure une partie en saillie vers le bas 36 en forme de U adaptée à venir s'encliqueter sur un axe 37 solidaire de l'anse 18. Une extrémité 38 de la languette 35 est adaptée à venir sensiblement obturer, de manière non étanche, l'ouverture 34. La partie arrière 47 de la languette 35 opposée à l'extrémité 38 comporte sur sa partie inférieure un doigt 39 en saillie vers le bas, qui se termine par une extrémité libre renflée 40. Le doigt 39 présentant une certaine élasticité, l'extrémité 40 est adaptée à coopérer avec une surface de came 41 ménagée devant ladite extrémité 40 sur une excroissance 42 de l'anse 18. Lorsque la languette est dans sa position fermée représentée à la figure 4, l'extrémité renflée 40 se trouve dans la cavité concave 43 de la surface 41. Lorsque l'on appuie sur la partie arrière 47 de la languette portant le doigt 39, l'extrémité renflée 40 contourne le mamelon 44 et se loge dans la cavité 45. Si l'on appuie encore sur la même partie arrière 47 de la languette 35, l'extrémité renflée 40 contourne le second mamelon 46 pour immobiliser la languette dans la position d'ouverture maximale représentée à la figure 7.

Ainsi, la languette mobile 35 est montée de manière pivotante sur le couvercle 17 et comporte des moyens élastiques d'encliquetage 39, 41 pour l'immobiliser dans au moins une position sensiblement ouverte (figures 6 et 7) et une position sensiblement fermée (figure 4).

Les moyens adaptés à obturer au moins partiellement le passage de sortie de vapeur comprennent en outre un organe 50 mobile à l'intérieur du passage 7 de sortie de vapeur. L'organe mobile 50 et le passage 7 sont conformés d'une façon telle que l'organe mobile 50 est dans une position de repos dans laquelle il n'obstrue pas le passage 7 de sortie de vapeur, lorsque le couvercle 15 est dans une position dans laquelle son bord inférieur est sensiblement horizontal, et est adapté à passer par gravité dans une seconde position dans laquelle il obstrue le passage 7 de sortie de vapeur, lorsque le couvercle 17 est dans une position dans laquelle son bord inférieur fait un angle prédéterminé, par exemple 90°, avec un plan horizontal. Ainsi, dans l'exemple représenté, le passage 7 de sortie de vapeur a une section transversale sensiblement en forme de Z dont les deux branches sensiblement parallèles 51, 52 sont disposées sensiblement verticalement lorsque le couvercle est posé sur une surface horizontale. Comme représenté en détail aux figures 4, 6, 7 et 9, la branche 52 du passage 7 aboutissant à l'extrémité supérieure 33 du passage 7 comporte deux surfaces d'appui respectivement inférieure 53 et supérieure 54 adaptées à recevoir l'organe mobile 50 respectivement dans sa position de repos (voir figures 4, 6 et 7) et dans sa seconde position (voir figure 9).

L'organe 50 est par exemple une sphère ou un cylindre.

Bien entendu, la présente invention n'est pas limitée aux modes de réalisation que l'on vient de décrire, et on peut apporter à ceux-ci de nombreux changements et modifications sans sortir du domaine de l'invention.

On peut ainsi, par exemple, prévoir sur le couvercle deux éléments mobiles de verrouillage solidaires du couvercle et adaptés à faire prise en deux endroits sensiblement diamétralement opposés du récipient respectivement avec des moyens complémentaires dudit récipient, bord évasé verseur ou autres. Ces deux éléments mobiles peuvent être du type encliquetable.

On peut également remplacer le levier 20 qui pivote autour d'un axe 22 sensiblement parallèle au fond 15a du récipient, par un levier pivotant autour d'un axe perpendiculaire audit fond, l'extrémité formant crochet dudit levier coopérant avec des moyens complémentaires prévus sur le récipient.

La languette pivotante 35 pourrait être remplacée par une languette coulissante ou tout autre système connu d'obturation sommaire d'une ouverture.

Le bord verseur du récipient peut être un bord droit sur lequel on vient fixer par un moyen quelconque, soudure, rivetage, surmoulage, au moins un élément additionnel formant bord verseur.

## Revendications

1. Couvercle (4, 17) de sécurité pour récipient de cuisson (1, 15), comportant un bord supérieur (3, 16) évasé vers l'extérieur formant bord verseur, ledit couvercle comportant en deux endroits sensiblement opposés de sa périphérie des moyens de verrouillage adaptés à coopérer avec des moyens de verrouillage complémentaires du récipient de cuisson (1, 15) pour verrouiller ledit couvercle (4, 17) sur ledit récipient (1, 15) d'une manière telle qu'une opération manuelle au moins est nécessaire pour désolidariser le couvercle (4, 17) du récipient (1, 15), le couvercle (4, 17) comportant également un passage traversant (7) pour la sortie de la vapeur, les moyens de verrouillage étant adaptés à une cuisson sensiblement sans pression et comportant au moins un élément mobile solidaire du couvercle (4, 17) et adapté à être actionné dans un sens pour l'amener dans une position dans laquelle il est en prise avec des moyens complémentaires du récipient (1, 15) et dans le sens opposé pour l'amener au moins momentanément dans une autre position dans laquelle il n'est plus en prise avec lesdits moyens complémentaires, caractérisé en ce que les moyens de verrouillage comportent au moins un organe formant crochet (11, 19, 20) adapté à venir en prise sous ledit bord verseur (3, 16) pour verrouiller le couvercle (4, 17) sur le récipient (1, 15).

2. Couvercle de sécurité selon la revendication 1, caractérisé en ce que les moyens de verrouillage comprennent au moins un moyen encliquetable (11, 20).

3. Couvercle de sécurité selon l'une des revendications 1 ou 2, caractérisé en ce que l'organe formant crochet (20) est un levier monté sur le couvercle (17) dans une direction sensiblement radiale de manière pivotante autour d'un axe sensiblement parallèle au fond du récipient (15) et perpendiculaire à ladite direction radiale, ou perpendiculaire audit fond.

4. Couvercle de sécurité selon l'une des revendications 1 à 3, caractérisé en ce qu'il comporte des moyens (35, 50) adaptés à obturer au moins partiellement le passage (7) de sortie de vapeur.

5. Couvercle de sécurité selon la revendication 4, caractérisé en ce que les moyens (35, 50) adaptés à obturer au moins partiellement le passage (7) de sortie de vapeur comprennent une languette mobile (35) adaptée à être déplacée manuellement pour obturer plus ou moins complètement de manière non étanche le passage (7) de sortie de vapeur.

6. Couvercle de sécurité selon la revendication 5, caractérisé en ce que la languette mobile (35) est montée de manière pivotante sur le couvercle (17) et comporte des moyens élastiques (39) d'encliquetage pour l'immobiliser dans au moins une position sensiblement ouverte et une position sensiblement fermée.

7. Couvercle de sécurité selon l'une des revendications 4 à 6, caractérisé en ce que les moyens (35, 50) adaptés à obturer au moins partiellement le passage (7) de sortie de vapeur comprennent en outre un organe (50) mobile à l'intérieur du passage (7) de sortie de vapeur, l'organe mobile (50) et le passage (7) de sortie de vapeur étant conformés d'une façon telle que l'organe mobile (50) est dans une position de repos dans laquelle il n'obstrue pas le passage (7) de sortie de vapeur, lorsque le couvercle (17) est dans une position dans laquelle son bord inférieur est sensiblement horizontal, et est adapté à passer par gravité dans une seconde position dans laquelle il obstrue le passage (7) de sortie de vapeur, lorsque le couvercle (17) est dans une position dans laquelle son bord inférieur fait un angle prédéterminé avec un plan horizontal.

8. Couvercle de sécurité selon la revendication 7, caractérisé en ce que le passage (7) de sortie de vapeur a une section transversale sensiblement en forme de Z dont les deux branches (51, 52) sensiblement parallèles sont disposées sensiblement verticalement lorsque le couvercle (17) est posé sur une surface horizontale, en ce que l'extrémité inférieure (31) du passage (7) débouche dans une ouverture (32) ménagée dans le couvercle (17) alors que l'extrémité supérieure (33) du passage (7) débouche à l'extérieur au-dessus du couvercle, et en ce que la branche (52) du passage (7) aboutissant à l'extrémité supérieure (33) comporte deux surfaces d'appui (53, 54) adaptées à recevoir l'organe mobile (50) respectivement dans sa position de repos et dans sa seconde position.

9. Couvercle de sécurité selon l'une des revendications 1 à 8, caractérisé en ce qu'il comporte deux éléments mobiles de verrouillage solidaires du couvercle et adaptés à faire prise en deux endroits sensiblement diamétralement opposés du récipient respectivement avec des moyens complémentaires dudit récipient.
